# EUROPÄISCHE PATENTSCHRIFT

(11) **EP 0 897 429 B1**
(45) Veröffentlichungstag und Bekanntmachung des Hinweises auf die Patenterteilung: **09.05.2001**
(21) Anmeldenummer: 98907828.2
(22) Anmeldetag: 17.01.1998
(51) Int. Cl.: C21B 13/00, C22B 5/14, B01J 8/36, B01J 8/26, B01J 8/18

(54) **VERFAHREN UND VORRICHTUNG ZUR DIREKTREDUKTION VON FEINERZEN**
METHOD AND DEVICE FOR DIRECT REDUCTION OF ORE FINES
PROCEDE ET DISPOSITIF DE REDUCTION DIRECTE DE FINES DE MINERAI

(30) Priorität: 07.02.1997 DE 19704566; 19.02.1997 DE 19706348
(43) Veröffentlichungstag der Anmeldung: 24.02.1999
(73) Patentinhaber: Ferrostaal AG, 45128 Essen (DE)
(72) Erfinder: HEINRICH, Peter, D-47608 Geldern (DE); KNOP, Klaus, D-46424 Bottrop (DE)
(86) Internationale Anmeldenummer: DE9800159
(87) Internationale Veröffentlichungsnummer: WO9835063

(56) Entgegenhaltungen:
- DE-A- 3 932 182
- DE-A- 4 326 562

## Beschreibung

Die Erfindung betrifft ein Verfahren zur Direktreduktion von Feinerzen mit einem breiten Körnungsspektrum mittels Wasserstoff in einer liegenden Wirbelschichtrinne. Die Erfindung betrifft ferner eine Vorrichtung zur Durchführung des Verfahrens.

Aus der DE-C2- 4326562 ist bereits ein liegender Reaktor mit innenliegendem Anströmboden mit allen wesentlichen zum Betrieb eines derartigen Reaktors erforderlichen Einrichtungen bekannt.

Der liegende Wirbelschichtreaktor nach der DE-C2- 4326562 weist einen Nachteil auf, der darin besteht, dass in ihm nur mit einem vorgegebenen Kömungsband gearbeitet werden kann, das durch die Anströmgeschwindigkeit (Fluidisiergeschwindigkeit) im Wirbelbett festgelegt ist. Ein jeweils anderes Körnungsband setzt demnach andere Anströmgeschwindigkeiten voraus. Ausserdem ist eine Siebtrennung vor Aufgabe auf den Wirbelschichtreaktor notwendig.

Aufgabe der Erfindung ist es, das in der vorgenannten Druckschrift beanspruchte Verfahren dahingehend zu verbessern, dass es gelingt, ein möglichst breites Kömungsspektrum eines Feinerzes in einer liegenden Wirbelschichtrinne optimal zu reduzieren.

Hierzu wird als Stand der Technik auf die DE-A-3932182 (siehe Spalte 1, Zeile 64 - Spalte 2, Zeile 11) verwiesen.

Es ist ferner eine Aufgabe der Erfindung, eine an sich bekannte Wirbelschichtrinne so auszubilden, dass das angestrebte Verfahren durchgeführt werden kann. Ein weiteres Ziel der Erfindung soll es sein, eine wärmewirtschaftlich optimale Arbeitsweise der Reduktionsanlage zu gewährleisten.

Die Lösung dieser Aufgaben geht aus den Merkmalen der Patentansprüche 1 und 2 hervor. Bevorzugte Ausführungsformen sind in den Unteransprüchen enthalten.

Bei der Beschreibung der Vorrichtung kann in Teilen auf die Beschreibungsunterlagen der DE-C2- 4326562 verwiesen werden.

Die vorliegende Erfindung macht nämlich von dem Grundkonzept des in der DE-C2-4326562 beschriebenen Reaktors Gebrauch.

Nach dem erfindungsgemäßen Verfahren und mit der Vorrichtung ist es möglich, Feinerze mit einem Kömungsspektrum von kleiner 6,3 mm bis 0,02 mm zu verarbeiten. Vorzugsweise wählt man Körnungen zwischen kleiner 3,0 mm bis 0,02 mm.

In Pufferbehältern lagernde Feinerze werden darunter angeordneten Druckgefäßen aufgegeben. Diese Druckgefäße dienen als Druckschleusen zum Einbringen des Feinerzes in einen Vorerhitzer. Dieser Vorerhitzer, beispielsweise ein Wirbelbettreaktor oder ein Sprudelbettreaktor, steht wie die sich anschließende liegende Wirbelschichtrinne unter Überduck.

Jeweils ein Druckgefäß wird von einem unter atmosphärischen Druck stehendem Pufferbehälter beladen, während das andere Druckgefäß in den Vorerhitzer entladen wird.

Der Vorerhitzer dient der Vorwärmung des Feinerzes unter Verwendung des sogenannten Top-Gases aus der liegenden Wirbelschichtrinne, dem eigentlichen Reduktionsreaktor.

Die Anströmgeschwindigkeit in dem Vorerhitzer ist so gewählt, dass Feinerz mit einer Korngröße kleiner ca. 0,5 mm weitestgehend aus dem Vorerhitzer ausgetragen wird. Dieses Feinerz wird über einen Heißgaszyklon abgeschieden und zusammen mit dem vorerwärmten Feinerz aus dem Vorerhitzer der ersten Kammer der liegenden Wirbelschichtrinne, also dem eigentlichen Reduktionsreaktor, zugeführt.

Das Entladen des der liegenden Wirbelschichtrinne vorgeschalteten Vorerhitzers, nämlich das Entladen der Kornfraktionen von beispielsweise kleiner ca. 3 mm bis 0,5 mm, geschieht ungeregelt über eine Feststoffleitung, über die das Feinerz in die erste Kammer des liegenden Reduktionsreaktors eingetragen wird. Diese Kammer ist mit einem Wärmetauscher versehen, durch den das Feinerz auf eine gewünschte Temperatur des Wirbelbettes aufgeheizt werden kann. Die Wirbelbett-Temperatur soll vorzugsweise im Bereich von etwa 680 bis 700 °C liegen. Anström- und Reduktionsmedium ist vorzugsweise Wasserstoff, der zuvor in einem Reduktionsgas-Erhitzer auf etwa 710 °C aufgeheizt wurde. Die Anströmgeschwindigkeit wird so gewählt, dass im wesentlichen kein Feinerz mehr ausgetragen werden kann.

Nach der Erfindung ist es besonders vorteilhaft, wenn für die Beheizung der Wärmetauscher hoch aufgeheiztes Reduktionsgas verwendet wird und das den jeweiligen Wärmetauscher verlassende Reduktionsgas der liegenden Wirbelschichtrinne als Anström- und Reduktionsmittel zufließt. Das in den ersten Wärmetauscher gelangende Reduktionsgas kann beispielsweise auf ca. 850 ° C aufgeheizt sein. Es verlässt diesen Wärmetauscher mit einer niedrigeren Temperatur von z.B. 720 ° C.

Durch diese Anordnung ist es möglich, die für die Reduktion von Fe₂O₃ nach FeO sowie das Aufheizen des Feinerzes erforderliche Wärme vollständig über den bzw. die Wärmetauscher zu übertragen.

Durch das Reduktionsgas ist lediglich nur noch die Wärme für die Reduktion von FeO nach Fe aufzubringen. Die Reduktion wird dadurch besonders effizient. Dies haben entsprechende Versuche gezeigt.

Durch geeignete und handelsübliche Einrichtungen wird die Fluidisiergeschwindigkeit in der ersten Kammer der Wirbelschichtrinne am höchsten eingestellt, nämlich z.B. bei einem Aufgabe-Körnungsspektrum kleiner ca. 3,0 mm bis ca. 0,02 mm so hoch, dass im Beispiel alles Feinerz mit einer Körnung kleiner ca. 0,5 mm bis ca. 0,02 mm mit dem Gasstrom über einen Abscheider, z.B. einen Heißgaszyklon, mit dem Gas ausgetragen wird.

Der Rest des Feinerzes ca. 3,0 mm bis ca. 0,5mm verbleibt in dieser Kammer und wird dort reduziert.

Die in dem der ersten Kammer zugeordneten Zyklon abgeschiedene Erzfraktion kleiner ca. 0,5 mm wird nun der zweiten Kammer zugeführt. In dieser zweiten Kammer ist die Fluidisiergeschwindigkeit niedriger eingestellt als in der ersten Kammer, nämlich beispielsweise so hoch, dass der Anteil ca. 0,5 mm bis ca. 0,1 mm in der zweiten Kammer verbleibt und dort reduziert wird, während der Kornanteil kleiner ca. 0,1 mm über den Zyklon der zweiten Kammer mit dem Gas ausgetragen wird. Der in diesem Zyklon abgeschiedene Feinerzanteil kleiner 0,1 mm wird der dritten Kammer der Wirbelschichtrinne zugeführt, in der der Anteil kleiner 0,1 mm verbleibt und reduziert wird.

Der in dem der dritten Kammer zugeordneten Zyklon abgeschiedene Feststoff wird in diese Kammer zurückgeführt.

Das gesamte Gas aller den Kammern zugeordneten Zyklonen gelangt über eine Sammelleitung in den Vorerhitzer.

Das reduzierte Feinerz, im Beispiel das Erz aller drei Kammern, wird über Druckgefäße zur Weiterverarbeitung transportiert.

Selbstverständlich muss die erfindungsgemäße Wirbelschichtrinne nicht unbedingt drei Kammern aufweisen, sie kann vielmehr auch in zwei oder mehr als drei Kammern aufgeteilt sein.

Nach den Merkmalen der Vorrichtungs-Unteransprüche kann es vorteilhaft sein, Zwischenwände zwischen den einzelnen Kammern in der Weise in Längsrichtung der Wirbelschichtrinne zu verschieben, so dass eine Vergrößerung der Anströmfläche einer Kammer bzw. eine Verkleinerung der Anströmfläche einer anderen Kammer erreicht wird. Diese Maßnahme kann dann erforderlich werden, wenn eine Änderung der Kornverteilung des zu reduzierenden Feinerzes eingetreten ist, so beispielsweise bei Vergrößerung des Anteils kleiner 0,1 mm. Dann lässt sich durch Verschiebung der Zwischenwand die Kammer mit dem Feinerz kleiner 0,1 mm vergrößern und dafür werden die anderen Kammern kleiner.

Wenn sich zum Beispiel der Feinstanteil des zu reduzierenden Erzes noch mehr erhöht, kann durch Einfügen eines Zwischenstückes die Länge der Wirbelschichtrinne vergrößert werden und dadurch vergrößert sich die Anströmfläche.

Die erste Kammer kann aus zwei Abteilungen bestehen, nämlich der Aufheiz- und Vorreduktionsabteilung (zur Umwandlung von Fe₂O₃ nach FeO), in der auch der Wärmetauscher untergebracht ist sowie der eigentlichen Reduktionsabteilung, in der die Reduktion bis zu einer Metallisierung von etwa 98 % stattfindet (Umwandlung von FeO nach Fe). Hier ist ein Wärmetauscher nicht unbedingt notwendig, da die durch die Reduktion benötigte Wärme durch das Reduktionsgas aufgebracht werden kann.

Die beiden o.g. Abteilungen sind durch eine Mauer getrennt. Das Feinerz aus der ersten Abteilung muss über diese Mauer fliessen, um in die zweite Abteilung zu gelangen. Die Höhe der Mauer bestimmt die Höhe des Wirbelbettes. Zur Vermeidung von "toten" Bereichen (Segregationen) im Wirbelbett ist die Mauer in dieser und in den folgenden Kammern vorteilhafterweise im unteren Teil perforiert.

Das fertig reduzierte Feinerz verlässt die zweite Abteilung über einen "hochgelegten" Trichter, aus dem das reduzierte Feinstgut über einen Schleusenbehälter pneumatisch ausgetragen wird.

Die zweite Kammer der liegenden Wirbelschichtrinne, die über den der ersten Kammer zugeordneten Zyklon mit Feinerz versorgt wird, enthält ebenfalls einen Wärmetauscher, um das Wirbelbett auf die gewünschte Temperatur zu bringen. Dies gilt im Beispiel auch für die dritte Kammer.

Die endotherme Reduktion von FeO nach Fe benötigt nur einen vergleichsweise geringen Bedarf an Wärme für die Reduktion. Diese Wärme kann mit dem ausströmenden Reduktionsgas eingebracht werden.

In der zweiten Kammer ist die Fluidisiergeschwindigkeit (Anströmgeschwindigkeit) so gewählt, dass alles Feinerz mit einer Korngröße im Bereich von vorzugsweise kleiner 0,1 mm mit dem Gasstrom ausgetragen wird, während der Anteil des Feinerzes im Bereich von ca. 0,5 mm bis 0,1 mm in der ersten Kammer verbleibt und dort fertig reduziert wird.

Das die zweite Kammer verlassende Gas, welches vorzugsweise mit Feinerz im Bereich kleiner 0,1 mm beladen ist, wird einem Kammer-Heißgaszyklon zugeführt, in dem ein hoher Prozentsatz des Feinerzes kleiner 0,1 mm aus dem Gasstrom abgeschieden wird.

Die in diesem Kammer-Heißgaszyklon abgeschiedene Feinerzfraktion kleiner 0,1 mm wird einer dritten Kammer der liegenden Wirbelschichtrinne zugeführt. In dieser Kammer ist die Anströmgeschwindigkeit so eingestellt, dass der Anteil an Korn im Bereich 0,1 bis 0,02 mm in dieser dritten Kammer verbleibt und fertig reduziert wird. Da dieses Feinerz, das die dritte Kammer erreicht, bereits hinreichend aufgeheizt und vorreduziert ist, wird für diese dritte Kammer eventuell kein Wärmetauscher benötigt. Die erforderliche Wärme für die Reduktion kann nämlich allein durch das Gas aufgebracht werden, wobei die Wirbelbetttemperatur hier im Bereich von 680 bis 700 ° C liegt.

Das Feinerz, das in dem der dritten Kammer zugeordneten Kammer-Heißgaszyklon abgeschieden wird, gelangt wieder zur Endreduktion in diese dritte Kammer.

Das gesamte Gas aus allen drei den Kammern zugeordneten Kammer-Heißgaszyklonen wird über eine Sammelleitung als "gereinigtes" Top-Gas dem stehenden Vorerhitzer als Heizmittel zugeleitet.

Die nach der ersten Kammer der liegenden Wirbelschichtrinne folgenden weiteren Kammern sind ähnlich der ersten Kammer mit Mauern in Abteilungen unterteilt, so dass hierdurch bedingt eine Rück- oder Quervermischung der Körner vermieden wird. Die Größe der Abteilungen kann bedarfsweise festgelegt werden.

Jede Kammer der liegenden Wirbelschichtrinne enthält neben dem eigentlichen Auslauf (einem hochgelegten Auslauf) einen Auslauf, der im Boden der jeweils letzten Abteilung angeordnet ist. Über diesen Auslauf, der über eine Zellenradschleuse gesteuert wird, kann segregiertes Feinerz ausgetragen werden. Dieser Austrag ist jedoch nur als Notaustrag anzusehen.

Die beschriebenen einzelnen Kammern sind unterschiedlich groß hinsichtlich der Anströmfläche, so dass bei der Auslegung der Wirbelschichtrinne die jeweiligen maximal möglichen Anteile in den Fraktionen 3 bis 0,5 mm, 0,5 bis 0,1 mm und kleiner 0,1 mm bekannt sein sollten. Jedoch kann durch die Möglichkeit des zuvor erwähnten Einfügens von Reaktorzwischenstücken (spool pieces) sowie durch Verschiebung der Kammer-Zwischenwände einer dauernden Änderung im Kornaufbau des Feinerzes Rechnung getragen werden.

Zwischenstücke können auch eingefügt werden, wenn die Leistung der liegenden Wirbelschichtrinne gesteigert werden soll oder aufgrund von niedrigerer Verabeitungstemperatur des Erzes (Sticking) eine längere Verweilzeit benötigt wird.

Das reduzierte Feinerz wird aus den Kammern der Wirbelschichtrinne über eine oder mehrere Schleusen (Druckgefäße) zur Weiterverarbeitung ausgetragen. Unter Weiterverarbeitung wird z.B. eine Brikettieranlage verstanden oder ein Elektrolichtbogenofen.

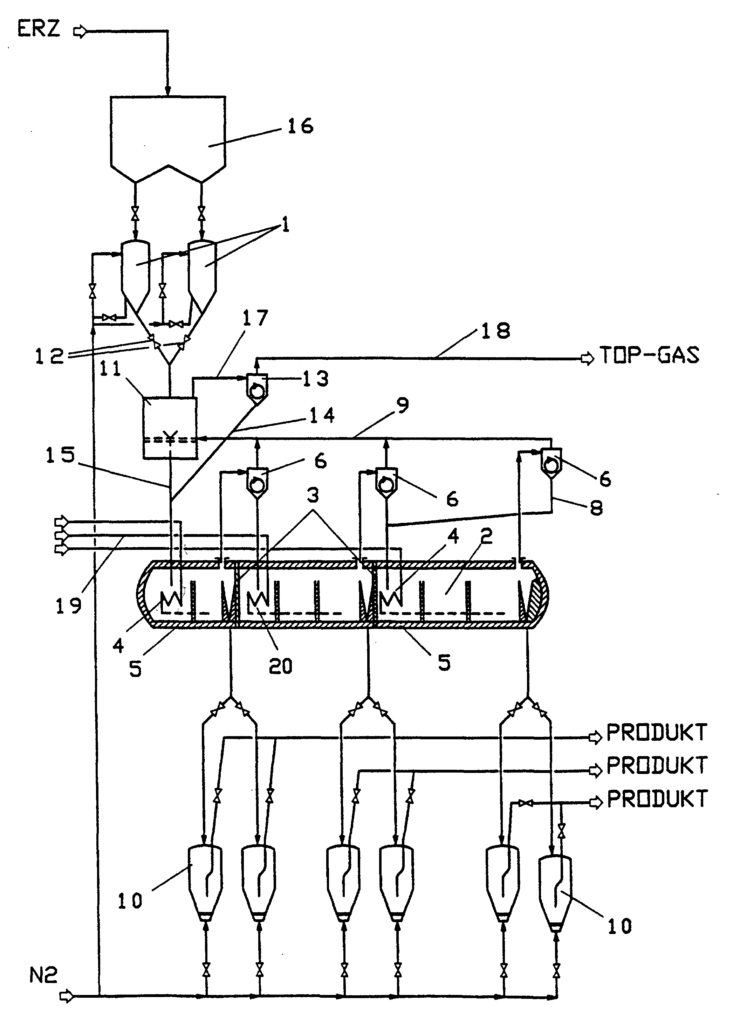

Ein Ausführungsbeispiel der Vorrichtung nach der Erfindung wird nachstehend anhand einer einzigen Figur näher erläutert.

Das zu reduzierende Feinerz wird aus Pufferbehältern (16) in Druckgefäße (1) eingetragen. Diese Pufferbehälter (16) sind drucklos. Anschließend wird das Feinerz abwechselnd von dem einen und von dem anderen Druckgefäß (1) über regelbare Austrageinrichtungen (12) in den Vorerhitzer (11), beispielsweise Wirbelbettreaktor oder Sprudelbettreaktor, entladen.

Im Vorerhitzer (11) findet die Vorwärmung des Feinerzes unter Verwendung von sog. Top-Gas statt, das aus den den Kammern (2) der liegenden Wirbelschichtrinne zugeordneten Kammer-Heißgaszyklonen (6) über eine Sammelleitung (9) zugeführt wird.

Dem Vorerhitzer (11) ist ein Heißgaszyklon (13) nachgeschaltet, in welchem das aus dem Vorerhitzer (11 ) mit dem austretenden Gas mitgeführte Feinerz kleiner ca. 0,5 mm abgeschieden wird. Diese abgeschiedene Feinerzfraktion gelangt über die Feststoffaustragleitung (14) in die Feststoffleitung (15) unter dem Vorerhitzer (11).

Das aus dem Heißgaszyklon (13) austretende Gas (Top-Gas = Gichtgas) wird über eine Gasaustrittsleitung (18) zur Nachbehandlung (u.a. Gaswäsche) geleitet.

Zum Austragen der vorgewärmten Feinerzfraktion kleiner 6,3 mm bis ca. 0,5 mm, vorzugsweise kleiner 3 mm bis ca. 0,5 mm, ist eine Feststoffleitung (15) unterhalb des Vorerhitzers (11) vorgesehen. In dieser Leitung (15) wird die genannte Feinerzfraktion in die erste Kammer (2) der liegenden Wirbelschichtrinne eingetragen, in der die Reduzierung des Feinerzes beginnt.

Die einzelnen Kammern (2) sind mit Einrichtungen (5) zur regelbaren Einstellung der Anströmgeschwindigkeit des Wirbelmediums ausgerüstet.

Das in der ersten Kammer (2) fertig reduzierte Feinerz wird in ein Druckgefäß (10) abgelassen. Das aus dieser ersten Kammer (2) austretende Gas mit dem in ihm noch enthaltenen Feinerz gelangt in den dieser Kammer (2) zugeordneten Kammer-Heißgaszyklon (6).

Das aus der zweiten Kammer (2) und der dritten Kammer (2) der liegenden Wirbelschichtrinne ausgetragene, fertig reduzierte Feinerz gelangt in die nachgeschalteten Druckgefäße (10). Selbstverständlich kann anstelle der in der Figur dargestellten sechs Druckgefäße (10) auch nur ein Druckgefäß (10) installiert werden, in welches dann die Feinerzausträge aller Kammern (2) eingetragen werden.

Das reduzierte Feinerz aus den Druckgefäßen (10) wird unter Überduck einer Weiterverarbeitungseinrichtung zugeführt. Diese kann eine Brikettieranlage für Feinerz sein oder beispielsweise ein Elektrolichtbogenofen.

Das aus der zweiten Kammer (2) der liegenden Wirbelschichtrinne mit dem Gas ausgetragene Feinerz wird über einen Kammer-Heißgaszyklon (6) geleitet, in welchem das Gas vom Feinerz getrennt wird. Das Feinerz wird in die dritte Kammer (2) abgelassen und das Gas wird über die Sammelleitung (9) als Vorwärmmittel dem Vorerhitzer (11) zugeleitet.

Schließlich wird das mit dem Gas aus der dritten Kammer (2) ausgetragene Feinerz in dem dieser Kammer (2) zugeordneten Kammer-Heißgaszyklon (6) abgeschieden und zur Endreduktion wieder in die dritte Kammer (2) der liegenden Wirbelschichtrinne geleitet.

Das Gas aus dem Kammer-Heißgaszyklon (6) gelangt ebenfalls als Vorwärmgas in den Anströmboden des stehenden Vorerhitzers (11).

Um die Wirtschaftlichkeit der Reduktionsanlage zu erhöhen, wird vorgesehen, dass für die Beheizung der in die Kammern (2) der liegenden Wirbelschichtrinne eingetauchten Wärmetauscher (4) hoch erhitztes Reduktionsgas (vorzugsweise Wasserstoff) verwendet wird. Das aus diesen Wärmetauschern (4) austretende Reduktionsgas wird anschließend den Anströmböden der Kammern (2) der liegenden Wirbelschichtrinne als Reduktionsmittel zugeführt.

Im Ausführungsbeispiel enthalten alle Kammern (2) Wärmetauscher (4). Je nach Auslegung der Reduktionsanlage kann auf die Ausrüstung aller Kammern (2) mit Wärmetauschem (4) verzichtet werden.

### Bezugsziffernliste:

- 1: Druckgefäße
- 2: Kammer der liegenden Wirbelschichtrinne
- 3: Zwischenwand
- 4: Wärmetauscher
- 5: Einrichtung zum Regeln der Anströmgeschwindigkeit
- 6: Kammer-Heißgaszyklon
- 8: Feststoffaustrag des letzten Zyklons (6)
- 9: Sammelleitung von 6 nach 11
- 10: Druckgefäß für reduziertes Feinerz
- 11: Vorerhitzer für Feinerz
- 12: Austrageinrichtungen von 1
- 13: Heißgaszyklon von 11
- 14: Feststoffaustragleitung von 13
- 15: Feststoffleitung von 11
- 16: Pufferbehälter für Feinerz
- 17: Gasaustrittsleitung von 11
- 18: Gasaustrittsleitung von 13
- 19: Gas-Eintrittsleitung von 4
- 20: Gas-Austrittsleitung von 4

## Patentansprüche

1. Verfahren zur Direktreduktion von Feinerzen mit einem breiten Körnungsspektrum mittels vorzugsweise Wasserstoff als Reduktionsgas in einer liegenden Wirbelschichtrinne, wobei
Feinerz zur Vorwärmung geregelt einem Vorerhitzer unter Überduck zugeführt wird,
das vorgewärmte Feinerz in eine durch Zwischenwände in mehrere Kammern unterteilte, durch hoch erhitztes Reduktionsgas indirekt beheizte liegende Wirbelschichtrinne ausgetragen wird,
in den Kammern eine Aufheizung und Reduzierung des Feinerzes stattfindet,
die Fluidisiergeschwindigkeit des Gases in der ersten Kammer am höchsten ist und von Kammer zu Kammer abnimmt, so dass bestimmte Kornfraktionen des Feinerzes zusammen mit dem Gas aus der jeweiligen Kammer ausgetragen und anschließend in Feinerz und Gas getrennt werden, wobei das abgetrennte Feinerz der jeweils folgenden Kammer zugeführt wird bzw. bei dem letzten Trennvorgang wieder der letzten Kammer zugeführt wird, und wobei die jeweils gröberen Kornfraktionen des Feinerzes in den jeweiligen Kammern verbleiben,
die von dem Feinerz abgetrennten heissen Gase aus allen Kammern dem Vorerhitzer als Heizmittel zugeführt werden,
das aus dem Vorerhitzer austretende feststoffhaltige heisse Gas gesichtet wird, wobei der ausgesichtete Feststoff der ersten Kammer der liegenden Wirbelschichtrinne zugeführt wird und das Gas einer Nachbehandlung zugeleitet wird, und
die in den einzelnen Kammern verbliebenen Feinerze nach Beendigung des Reduktionsprozesses unter Druck einer Weiterverarbeitung zugeführt werden.

2. Vorrichtung zur Durchführung des Verfahrens zur Direktreduktion von Feinerzen mit einem breiten Körnungsspektrum mittels Wasserstoff als Reduktionsgas in einer liegenden Wirbelschichtrinne nach Anspruch 1, mit Pufferbehälter (16) für Feinerze mit darunter angeordneten Druckgefäßen (1) mit regelbaren Austrageinrichtungen (12), welche in einem darunter angeordneten Vorerhitzer (11), beispielsweise einen Wirbelbettreaktor oder einen Sprudelbettreaktor, zum Vorwärmen des Feinerzes münden mit einem dem Vorerhitzer (11) nachgeschalteten Heißgaszyklon (13) mit einer Gasaustrittsleitung (18) für das nachzubehandelnde Gichtgas und mit einer Feststoffaustragleitung (14), die in eine Austragleitung (15) für vorgewärmtes Feinerz aus dem Vorerhitzer (11) mündet, wobei die Austragleitung (15) für vorgewärmtes Feinerz in eine erste Kammer (2) einer durch Zwischenwände (3) in mehrere Kammern (2) unterteilte liegende Wirbelschichtrinne mündet,
mit in die Kammern (2) eingetauchten Wärmetauschern (4),
mit Reduktionsgaszufuhrleitungen (19), in denen hoch erhitztes Reduktionsgas zur indirekten Beheizung der liegenden Wirbelschichtrinne in die Wärmetauscher (4) eingeleitet wird,
mit Einrichtungen (5) zur regelbaren Einstellung der Fluidisiergeschwindigkeit in den einzelnen Kammern (2), wobei die Fluidisiergeschwindigkeit von Kammer (2) zu Kammer (2) verringerbar ist,
mit jeder Kammer (2) nachgeschalteten Kammer-Heißgaszyklonen (6) zur Abscheidung einer bestimmten Komfraktion des Feinerzes, wobei die abgeschiedene Kornfraktion jeweils in die nächste bzw. letzte Kammer (2) zuführbar ist,
mit einen Sammelleitung (9), durch die das gesamte Gas aller Kammer-Heißgaszyklone (6) als Heizmittel dem stehenden Vorerhitzer (11) zugeleitet wird, und
mit unterhalb jeder Kammer (2) angeordneten Druckgefäßen (10) zur Ausschleusung und zum Transport des reduzierten Feinerzes zur Weiterverarbeitung.

3. Vorrichtung nach Anspruch 2,
dadurch gekennzeichnet,
dass an die Wärmetauscher (4), welche in das in den Kammern (2) erzeugte Wirbelbett eingetaucht sind, Gas-Eintrittsleitungen (19) angeschlossen sind, durch die hoch erhitztes Reduktionsgas zur Beheizung der Wärmetauscher (4) fließt und
dass Gas-Austrittsleitungen (20) das die Wärmetauscher (4) verlassende Reduktionsgas in die Anströmböden der Kammern (2) als Anström- und Reduktionsmittel fließen lassen.

4. Vorrichtung nach den Ansprüchen 2 und 3,
dadurch gekennzeichnet,
dass die Zwischenwände (3) der Kammern (2) verschiebbar sind, um die Anströmflächen der Kammern (2) der liegenden Wirbelschichtrinne zu vergrößern bzw. zu verkleinern.

5. Vorrichtung nach Anspruch 4,
dadurch gekennzeichnet,
dass zur Vergrößerung der Anströmfläche der liegenden Wirbelschichtrinne jeweils ein Kammer-Zwischenstück einsetzbar ist.

## Claims

1. Method for the direct reduction of ore fines having a broad grain size spectrum preferably using hydrogen as the reducing gas in a horizontal fluidised bed channel, wherein ore fines are fed to a pre-heater in a controlled manner under excess pressure for pre-heating,
the pre-heated ore fines are discharged into a horizontal fluidised bed channel which is divided by intermediate walls into several chambers and which is heated indirectly by highly heated reducing gas,
heating and reduction of the ore fines take place in the chambers,
the fluidisation rate of the gas is at its highest in the first chamber and decreases from chamber to chamber, so that specific grain fractions of the ore fines are discharged together with the gas from the particular chamber concerned and are subsequently separated into ore fines and gas, the separated ore fines being fed to the following chamber or, in the case of the last separating operation, being fed back to the last chamber, and the coarser grain fractions of the ore fines remaining in the particular chambers concerned, the hot gases from all chambers, which gases have been separated from the ore fines, are fed to the pre-heater as heating media,
the solids-containing hot gas leaving the pre-heater is screened, the screened-out solid material being fed to the first chamber of the horizontal fluidised bed channel and the gas being conveyed to an after-treatment, and,
when the reduction process has been completed, the ore fines remaining in the individual chambers are fed under pressure to further processing.

2. Device for carrying out the method for the direct reduction of ore fines having a broad grain size spectrum using hydrogen as the reducing gas in a horizontal fluidised bed channel according to claim 1, having a buffer container (16) for ore fines with pressure vessels (1) arranged beneath it having controllable discharge devices (12) which lead into a pre-heater (11) arranged beneath them, for example a fluidised bed reactor or a spouted bed reactor, for pre-heating the ore fines,
having a hot-gas cyclone (13) which is arranged downstream of the pre-heater (11) and which has a gas-discharge pipe (18) for the top gas to be after-treated and which has a solids-discharge pipe (14) which leads into a discharge pipe (15) for pre-heated ore fines from the pre-heater (11), the discharge pipe (15) for pre-heated ore fines leading into a first chamber (2) of a horizontal fluidised bed channel divided by intermediate walls (3) into several chambers (2), having heat exchangers (4) submerged in the chambers (2), having reducing-gas feed pipes (19) in which highly heated reducing gas is introduced into the heat exchangers (4) for the indirect heating of the horizontal fluidised bed channel,
having devices (5) for the controllable adjustment of the fluidising rate in the individual chambers (2), the fluidising rate being reducible from chamber (2) to chamber (2),
having chamber hot-gas cyclones (6), arranged downstream of each chamber (2), for separating a specific grain fraction of the ore fines, the separated grain fraction being feedable into the next or last chamber (2),
having a collecting pipe (9) through which the total amount of gas from all the chamber hot-gas cyclones (6) is fed as heating medium to the stationary pre-heater (11), and
having pressure vessels (10), arranged beneath each chamber (2), for discharging and for transporting the reduced ore fines for further processing.

3. Device according to claim 2,
characterised in that
gas-inlet pipes (19), through which highly heated reducing gas for heating the heat exchangers (4) flows, are connected to the heat exchangers (4) which are submerged in the fluidised bed generated in the chambers (2), and
in that gas-outlet pipes (20) cause the reducing gas leaving the heat exchangers (4) to flow into the flow bases of the chambers (2) in the form of flow and reducing medium.

4. Device according to claims 2 and 3,
characterised in that
the intermediate walls (3) of the chambers (2) are displaceable in order to increase or reduce the surface areas of the chambers (2) of the horizontal fluidised bed channel exposed to flow.

5. Device according to claim 4,
characterised in that
a chamber spool piece can be used to increase the surface area of the horizontal fluidised bed channel exposed to flow.

## Revendications

1. Procédé de réduction directe de fines de minerai ayant' un spectre granulométrique étendu, de préférence à l'aide d'hydrogène comme gaz réducteur dans une goulotte à lit fluidisé, couchée, selon lequel
- on fournit de manière régulée, les fines de minerai pour leur préchauffage, , à un préchauffeur en surpression,
- on extrait les fines de minerai préchauffées dans une goulotte à lit fluidisé, couchée, subdivisée par des cloisons en plusieurs chambres et chauffées indirectement par le gaz réducteur encore chaud,
- on chauffe et on réduit les fines dans les chambres,
- la vitesse de fluidisation du gaz dans la première chambre est la plus élevée et elle diminue de chambre à chambre pour que des fractions définies de grains des fines de minerai soient extraites de chaque chambre avec le gaz et ensuite on sépare les fines et le gaz,
- les fines séparées étant fournies chaque fois à la chambre suivante où dans le cas de la dernière opération de séparation elles sont de nouveau fournies à la dernière chambre, et
- les fractions de grains les plus grossiers des fines de minerai restent dans les chambres respectives,
- les gaz chauds séparés des fines de minerai de toutes les chambres sont fournis comme moyen de chauffage au préchauffeur,
- le gaz chaud contenant les matières solides, sortant du préchauffeur, est clarifié et la matière solide éliminée est fournie à la première chambre de la goulotte à lit fluidisé et le gaz est fourni à un traitement de finition, et
- les fines de minerai qui subsistent dans les différentes chambres sont envoyées, après la fin de l'opération de réduction sous pression, à une étape ultérieure.

2. Dispositif pour la mise en oeuvre du procédé de réduction directe des fines de minerai ayant un spectre de granulométrie large, à l'aide d'hydrogène comme gaz réducteur dans une goulotte à lit fluidisé, couché, selon la revendication 1, comprenant :
- un réservoir tampon (16) pour les fines et en dessous de celui-ci des récipients sous pression (1) munis d'installations d'évacuation réglables (12), débouchant dans un préchauffeur (11) situé en dessous, par exemple un réacteur à lit fluidisé ou un lit fluidisé à courants de recirculation pour préchauffer les fines de minerai,
- un cyclone à gaz chaud (13), en aval du préchauffeur (11), comportant une conduite de sortie de gaz (18) pour le gaz chargé à traiter, et une conduite de sortie de matière solide (14) débouchant dans une conduite de sortie (15) pour les fines de minerai préchauffées sortant du préchauffeur (11), la conduite de sortie (15) pour les fines préchauffées débouchant dans une première chambre (2) d'une goulotte à lit fluidisé subdivisé en plusieurs chambres (2) par des cloisons (3),
- des échangeurs de chaleur (4) plongeant dans les chambres (2),
- des conduites d'alimentation de gaz réducteur (19) dans lesquelles on fait passer le gaz réducteur très chaud, dans l'échangeur de chaleur (4), pour chauffer indirectement la goulotte à lit fluidisé couchée,
- des installations (5) pour régler la vitesse de fluidisation dans les différentes chambres (2), cette vitesse de fluidisation diminuant d'une chambre (2) à l'autre,
- des cyclones à chambres à gaz chaud (6) en aval de chaque chambre (2) pour séparer une fraction granulométrique définie des fines de minerai, la fraction de grain, séparée, étant fournie chaque fois à la chambre suivante (2) ou à la dernière chambre,
- une conduite collectrice (9) pour l'ensemble du gaz de tous les cyclones-chambres à gaz chaud (6) comme moyen de chauffage pour le préchauffeur (11), et
- des récipients sous pression (10) se trouvant sous chaque chambre (2), pour écluser et transporter les fines de minerai réduites, en vue de la poursuite de leur traitement.

3. Dispositif selon la revendication 2,
caractérisé en ce que
des conduites d'entrée de gaz (19) sont raccordées aux échangeurs de chaleur (4) plongeant dans le lit fluidisé généré dans les chambres (2), conduites traversées par le gaz réducteur encore chaud pour permettre le chauffage de l'échangeur de chaleur (4), et
des conduites de sortie de gaz (20) laissent arriver le gaz réducteur quittant l'échangeur de chaleur (4) dans les fonds perforés des chambres (2) comme moyen de fluidisation et de réduction.

4. Dispositif selon les revendications 2 oui 3,
caractérisé en ce que
les cloisons (3) des chambres (2) sont coulissantes pour augmenter ou diminuer les surfaces de fluidisation des chambres (2) de la goulotte à lit fluidisé couchée.

5. Dispositif selon la revendication 4,
caractérisé en ce que
pour augmenter la surface de fluidisation de la goulotte à lit fluidisé, couchée, on peut introduire chaque fois une chambre intermédiaire.
